# EUROPEAN PATENT SPECIFICATION

(11) **EP 3 587 506 B1**
(45) Date of publication and mention of the grant of the patent: **05.04.2023**
(21) Application number: 18180537.5
(22) Date of filing: 28.06.2018
(51) Int. Cl.: C09D 5/24, H01B 1/12, C09D 7/40, C09D 7/20

(54) **LIQUID COMPOSITIONS COMPRISING PARTICLES OF A CONDUCTIVE POLYMER AND AN ORGANIC SOLVENT FORMING AN AZEOTROPE WITH WATER**
FLÜSSIGE ZUSAMMENSETZUNGEN MIT PARTIKELN AUS EINEM LEITFÄHIGEN POLYMER UND EINEM ORGANISCHEN LÖSUNGSMITTEL, DAS MIT WASSER EIN AZEOTROP BILDET
COMPOSITIONS LIQUIDES COMPRENANT DES PARTICULES D'UN POLYMÈRE CONDUCTEUR ET D'UN SOLVANT ORGANIQUE FORMANT UN AZÉOTROPE AVEC DE L'EAU

(43) Date of publication of application: 01.01.2020
(73) Proprietor: Heraeus Deutschland GmbH & Co. KG, 63450 Hanau (DE)
(72) Inventor: SCHEEL, Arnulf, 63450 Hanau (DE); GUNTERMANN, Udo, 63450 Hanau (DE); LÖVERICH, Wilfried, 63450 Hanau (DE); SAUTTER, Armin, 63450 Hanau (DE)
(74) Representative: Herzog IP Patentanwalts GmbH

(56) References cited:
- US-A1- 2009 121 618
- US-A1- 2014 065 400
- SEO YOON KYUNG ET AL: "Efficient ITO-free organic light-emitting diodes comprising PEDOT:PSS transparent electrodes optimized with 2-ethoxyethanol and post treatment", ORGANIC ELECTRONICS, ELSEVIER, AMSTERDAM, NL, vol. 42, 29 December 2016 (2016-12-29), pages 348-354, XP029887521, ISSN: 1566-1199, DOI: 10.1016/J.ORGEL.2016.12.059
- EOM S H ET AL: "Polymer solar cells based on inkjet-printed PEDOT:PSS layer", ORGANIC ELECTRONICS, ELSEVIER, AMSTERDAM, NL, vol. 10, no. 3, 10 February 2009 (2009-02-10), pages 536-542, XP026029298, ISSN: 1566-1199, DOI: 10.1016/J.ORGEL.2009.01.015 [retrieved on 2009-02-10]

## Description

The present invention relates to a liquid composition which comprises particles comprising a complex of a polythiophene and a polyanion, to a process for the preparation of a layered body, to the layered body obtainable by such a process and to the use of a liquid composition.

Conductive polymers are increasingly gaining economic importance, since polymers have advantages over metals with respect to processability, weight and targeted adjustment of properties by chemical modification. Examples of known π-conjugated polymers are polypyrroles, polythiophenes, polyanilines, polyacetylenes, polyphenylenes and poly(p-phenylene-vinylenes). Layers of conductive polymers are employed in diverse industrial uses, e.g. as polymeric counter-electrodes in capacitors or for through-plating of electronic circuit boards. The preparation of conductive polymers is carried out chemically or electrochemically by oxidation from monomeric precursors, such as e.g. optionally substituted thiophenes, pyrroles and anilines and the particular optionally oligomeric derivatives thereof. In particular, chemically oxidative polymerization is widely used, since it is easy to realize industrially in a liquid medium or on diverse substrates.

A particularly important polythiophene which is used industrially is poly(3,4-ethylenedioxy-thiophene) (PEDOT or PEDT), which is described, for example, in EP 0 339 340 A2 and is prepared by chemical polymerization of 3,4-ethylenedioxythiophene (EDOT or EDT), and which has very high conductivities in its oxidized form. An overview of numerous poly(3,4-alkylenedioxythiophene) derivatives, in particular poly(3,4-ethylenedioxythiophene) derivatives, and their monomer units, syntheses and uses is given by A. Elschner, S. Kirchmeyer, W. Lövenich, U. Merker, K. Reuter "PEDOT Principles and Applications of an Intrinsically Conductive Polymer", CRC Press 2011. Often 3,4-ethylene-dioxy-thiophene is polymerized in water in the presence of polyanions such as polystyrene sulfonate (PSS), whereby aqueous compositions are obtained containing a complex of the cationic polythiophene and the polyanion (often referred to as "PEDOT/PSS"). Such a process is, for example, disclosed in in EP 0 440 957 A2. Due to the polyelectrolyte properties of PEDOT as a polycation and PSS as a polyanion, these compositions are not a true solution, but rather a dispersion. The extent to which polymers or parts of the polymers are dissolved or dispersed in this context depends on the weight ratio of the polycation and the polyanion, on the charge density of the polymers, on the salt concentration of the environment and on the nature of the surrounding medium (V. Kabanov, Russian Chemical Reviews 74, 2005, 3-20).

PEDOT/PSS-dispersions have acquired particular industrial importance. Transparent, conductive films which have found a large number of uses, e.g. as antistatic coatings or as conductive layers in electronic components, for examples as a hole injection layer in organic light-emitting diodes (OLED), as an intermediate layer in organic photovoltaic elements (OPV elements) or in organic photo detectors (OPD) or as an electromagnetic interference (EMI) shielding material. They are also commonly used for the formation of conductive polymers layer, in particular solid electrolyte layers or polymeric outer layers, in the production of solid electrolyte capacitors.

However, aqueous PEDOT/PSS-dispersions known from the prior art often dry too fast upon contact with the air, which leads to a clogging of the devices used to apply these dispersions onto substrates, such as slot-die-coaters, ink-jet printers or spraying nozzles. In order to reduce the drying speed of aqueous PEDOT/PSS-dispersions high-boiling solvents such as ethylene glycol and DMSO (i. e. solvents having a boiling point that is higher than the boiling point of water) have been added. Such an approach is, for example, disclosed in EP 0 686 662 A2. Adding such high-boiling solvents, however, also leads to a significant reduction of the sheet resistance of the resulting conductive polymer films, which is not desired when using conductive polymer layers as antistatic coatings, as an electromagnetic radiation shield or as a hole-transport layer in an organic light emitting diode (OLED) or in an organic photovoltaic (OPV) element or in an organic photo detector (OPD).

US 2014/065400 A1 discloses electrically conductive polymer compositions that can be used to produce coatings and films for use in electronic devices. The electrically conductive polymer compositions generally comprise an intrinsically conductive polymer, a UV curable resin, at least one solvent, and a photoinitiator.

US 2009/121618 A1 discloses a composition for inkjet printing an opto-electrical device, the composition comprising an electroluminescent or charge transporting organic material and a high boiling point solvent having a boiling point higher than water.

Soo-Hyoung Lee et al. ("Polymer solar cells based on inkjet-printed PEDOT:PSS layer"; Organic Electronics 10 (2009); 536-542) disclose the solar cell performance of the inkjet-printed PEDOT:PSS layer and the roles of additives in device efficiency.

Yong Hyun Kim et al. ("Efficient ITO-free organic light-emitting diodes comprising PEDOT:PSS transparent electrodes optimized with 2-ethoxyethanol and post treatment"; Organic Electronics 42 (2017); 348-354) disclose highly conductive PEDOT:PSS-films introduced with a newly investigated solvent 2-ethoxyethanol.

The present invention was based on the object of overcoming the disadvantages resulting from the prior art in connection with liquid compositions comprising polythiophenes, in particular with PEDOT/PSS-dispersions.

In particular, the present invention was based on the object of providing a liquid composition comprising polythiophenes that can be used for the formation of conductive layers with sufficiently high sheet resistance that allows the use of the compositions for the formation of an antistatic coating or an electromagnetic radiation shield or for the preparation of a hole-transport layer in an organic light emitting diode (OLED) or in an organic photovoltaic (OPV) element or in an organic photo detector (OPD), wherein the liquid composition does not lead to a clogging of devices used to apply these dispersions onto substrates, such as ink-jet printers or spraying nozzles.

A contribution towards achieving the abovementioned objects is made by a liquid composition comprising
i) particles comprising a complex of a polythiophene and a polyanion;
ii) a liquid phase, wherein the liquid phase comprises
   iia) water and
   iib) at least one organic solvent having
      - a boiling point, determined at a pressure of 1013 mbar, in the range from 110 to 250°C, preferably in the range from 120 to 225°C and most preferably in the range from 130 to 200°C
         and
      - a solubility in water, determined at 25°C, of at least 10 wt.-%, preferably at least 25 wt.-%, more preferably at least 50 wt.-% and most preferably at least 90 wt.-%;
   wherein the organic solvent iib) is capable of forming an azeotrope with water iia);
      - wherein the polythiophene is poly(3,4-ethylenedioxythiophene) and wherein the polyanion is an anion of polystyrene sulfonic acid;
      - wherein the at least one organic solvent iib) is diacetone alcohol;
      - wherein the liquid composition comprises the at least one organic solvent iib) in an amount of less than 10 wt.-%, based on the total weight of the liquid composition; and
      - wherein the liquid composition comprises the complex i) of a polythiophene and a polyanion in an amount of 0.001 to 2.5 wt.-%, based on the total weight of the liquid composition.

According to a preferred embodiment of the liquid composition according to the present invention the liquid composition is a dispersion in which particles i) are dispersed in the liquid phase ii).

A liquid phase that is *"capable of forming an azeotrope"* in the sense of the present invention is a liquid phase that upon heating reaches a point at which the composition is an azeotrope.

A *"solubility in water, determined at 25°C, of at least 10 wt.-%"* is given if at a temperature of 25°C at least 10 g of the organic solvent iib) can be dissolved in 100 g water iia).

Surprisingly, it has been discovered that by adding high-boiling organic solvents to aqueous PEDOT/PSS-dispersions for the purpose of slowing down the drying speed of the aqueous dispersions, an undesired increase of the sheet resistance can be avoided if high-boiling organic solvents are used that are capable of forming an azeotrope with water.

The particles i) comprise a PEDOT/PSS-complex. Such complexes are obtainable by polymerizing 3,4-ethylenedioxythiophene, oxidatively in an preferably aqueous solution in the presence of an anion of polystyrenesulphonic acid.

The weight average diameter (d₅₀) of the particles i) comprising the complex of a polythiophene and a polyanion is typically in the range from 10 nm to 2,000 nm, more preferably in the range from 20 nm to 500 nm, and more preferably in the range from 25 nm to 50 nm. The d₅₀-value of the diameter distribution states that 50 % of the total weight of all the particles i) can be assigned to those particles which have a diameter of less than or equal to the d₅₀ value (the d₅₀-value thus represents the weight average particle diameter). As in case of PEDOT/PSS-particles dispersed in an aqueous solution the particles are usually present in the form of swollen gel particles, the above mentioned particle sizes refer to the particles size of the swollen gel particles and are determined by means of an ultracentrifuge measurement.

The liquid composition according to the present invention comprises PEDOT/PSS in an amount of 0.001 to 2.5 wt.-%, preferably 0.005 to 1.0 wt.-% and most preferably 0.01 to 0.5 wt.-%, in each case based on the total weight of the liquid composition.

The liquid composition according to the present comprises, as component ii), a liquid phase, wherein the liquid phase comprises water iia) and diacetone alcohol, wherein the liquid phase is an azeotrope or is capable of forming an azeotrope.

According to a preferred embodiment of the liquid composition according to the present invention the liquid composition further comprises
iii) at least one additive selected from the group consisting of an UV-stabilizer, a surface-active substance, a low-boiling solvent, a pH-regulator, a crosslinker, a rheology modifier or a combination of at least two of these additives.

The UV-stabilizer that can be present as at least one further additive iii) is preferably gallic acid, a derivative of gallic acid or a mixture thereof. Particularly preferred derivatives of gallic acid are esters of gallic acid and sugar which are often called tannin or gallotannins (cf. Römpp Chemie, 10th edition (1999), page 4391). Further preferred derivatives of gallic acid alkyl esters, alkenyl esters, cycloalkyl esters, cycloalkenyl esters and aryl esters of gallic acid, preferably those having 1 to 15 C-atoms, preferably 1 to 6 C-atoms atoms in the alkyl group, the alkenyl group, the cycloalkyl group, the cycloalkenyl group or the aryl group of the ester. Most preferred derivatives of gallic acid are gallo-tannines, such as tannic acid, or alkylesters of gallic acid such as methyl gallate, ethyl gallate, propyl gallate or a mixture of at least two of these esters.

According to a preferred embodiment of the liquid composition according to the present invention the liquid composition comprises gallic acid, a derivative of gallic acid or a mixture thereof, preferably a gallotannine, more preferably tannic acid, in an amount of 0.0001 to 5 wt.-%, more preferably 0.001 to 2.5 wt.-% and most preferably 0.01 to 1 wt.-%, in each case based on the total weight of the liquid composition. If the liquid composition comprises a mixture of gallic acid and a derivative thereof or a mixture of at least two derivatives of gallic acid as component iii), the above amounts represent the total amount of these components.

The crosslinker that can be present as at least one further additive iii) is preferably a tetraalkyl orthosilicate. Preferred tetraalkyl orthosiliscates are selected from the group consisting of tetramethyl orthosilicate, tetraethyl orthosilicate, tetrapropyl orthosilicate, tetrabutyl orthosilicate, tetrapentyl orthosilicate, an at least partially hydrolysed product of these orthosiliscates and a mixture of at least two of these orthosiliscates, wherein the use of tetraethyl orthosilicate (TEOS) is particularly preferred.

According to a preferred embodiment of the liquid composition according to the present invention the liquid composition comprises a tetraalkyl orthosilicate, preferably TEOS, in an amount of 0.01 to 15 wt.-%, more preferably 0.1 to 10 wt.-% and most preferably 1 to 5 wt.-%, in each case based on the total weight of the liquid composition. If the liquid composition comprises a mixture of two or more tetraalkoxysilanes as component iii), the above amounts represent the total amount of these components.

A *"low-boiling solvent"* in the sense of the present invention that can be present as at least one further additive iii) is a solvent having a boiling point, determined at a pressure of 1013 mbar, of less than 100°C, preferably of less than 90°C and more preferably of less then 80°C. A preferred low-boiling solvent is ethanol. In this context it is also preferred that the liquid composition comprises the low-boiling solvent, preferably ethanol, in an amount of 10 to 90 wt.-%, more preferably 20 to 85 wt.-% and most preferably 30 to 80 wt.-%, in each case based on the total weight of the liquid composition.

In this context it is also preferred that the volume ratio water : ethanol in the liquid composition according to the present invention is in the range from 1 : 1 to 1 : 25, preferably in the range from 1 : 2 to 1 : 20 and more preferably in the range from 1 : 3 to 1 : 10. The volumes are determined for the individual components before mixing.

Suitable surface-active substances that can be used as at least one further additive iii) are, for example, anionic surfactants, such as e.g. alkylbenzenesulphonic acids and salts, paraffin sulphonates, alcohol sulphonates, ether sulphonates, sulphosuccinates, phosphate esters, alkyl ether carboxylic acids or carboxylates, cationic surfactants, such as e.g. quaternary alkylammonium salts, nonionic surfactants, such as e.g. linear alcohol ethoxylates, oxo alcohol ethoxylates, alkylphenol ethoxylates or alkyl polyglucosides, in particular surfactants that are commercially available under the trademarks Dynol^{®} and Zonyl^{®}.

The viscosity of the liquid composition according to the present invention is preferably between 10 and 100 mPa×s (measured with a rheometer at 20 °C and a shear rate of 100 s⁻¹). More preferably, the viscosity is between 1 and 10 mPa×s, particularly preferably between 2 and 5 mPa×s. The adjustment of the viscosity can, for example, be accomplished by adding appropriate rheology modifiers as a further additive iii).

According to a preferred embodiment of the liquid composition according to the present invention the pH of the liquid composition is not less than 2.5, more preferably the pH is in the range from 2.5 to 6, even more preferably in the range from 2.5 to 5 and most preferably in the range from 2.5 to 4, wherein the pH is determined at a temperature of 25°C. The pH can be adjusted by adding appropriate pH-regulators such as organic or inorganic acids as a further additive iii) to the liquid composition. Suitable acids are inorganic acid such as sulfuric acid, hydrochloric acid, nitric acid, phosphoric acid, silicic acid or a mixture of at least two of these inorganic acids, or organic acids such as acetic acid, formic acid, benzoic acid, p-toluensulfonic acid, PSS or a mixture of at least two of these organic acids, or a mixture of at least one of these inorganic acids and at least one of these organic acids.

The liquid composition according to the present invention may further comprise
iv) at least one further polymer being different from the polythiophene and the polyanion,
wherein this at least one further polymer iv) preferably serves as a binder. Suitable binders are selected from the group consisting of polyvinyl alcohols, polyvinylpyrrolidones, polyvinyl chlorides, polyvinyl acetates, polyvinyl butyrates, polyacrylic esters, polyacrylamides, polymethacrylic esters, polymethacrylamides, polyacrylonitriles, styrene/acrylic ester, vinyl acetate/acrylic ester, ethylene/vinyl acetate copolymers, polybutadienes, polyisoprenes, polystyrenes, polyethers, polyesters, sulfonated polyesters, polycarbonates, polyurethanes, polyamides, polyimides, polysulfones, melamine-formaldehyde resins, epoxy resins, silicone resins, silane resins, celluloses or a mixture of at least two of these binders. Further useful polymeric binders are preferably also those which are obtained by adding crosslinkers, for example melamine compounds, capped isocyanates or functional silanes, for example 3-glycidoxypropyltrialkoxysilane, tetraethyl orthosilicate and tetraethyl orthosilicate hydrolyzate, to crosslinkable polymers, for example polyurethanes, polyacrylates or polyolefins, and subsequently crosslinking. Water-soluble binders, such as sulfonated polyesters, are particularly preferred.

According to a preferred embodiment of the liquid composition according to the present invention the liquid composition comprises water iia) in an amount in the range from 10 to 98 wt.-%, preferably in the range from 20 to 97 wt.-%, more preferably in the range from 30 to 96 wt.-% and even more preferably in the range from 40 to 95 wt.-%, in each case based on the total weight of the liquid composition.

The liquid composition according to the present invention comprises the at least one organic solvent iib) in an amount of less than 10 wt.-%, preferably less than 8.5 wt.-% and more preferably less than 7 wt.-%, in each case based on the total weight of the liquid composition. In case of two or more organic solvents iib) these amounts define the total amount of organic solvents iib).

A dried layer prepared with the liquid composition according to the present invention preferably has a sheet resistance of at least 1 × 10⁶ Ω/sq, preferably of at least 5 × 10⁶ Ω/sq and more preferably of at least 1 × 10⁷ Ω/sq.

A dried layer prepared with the liquid composition according to the present invention preferably has an internal transmission of at least 98 % preferably of at least 98.5 %, more preferably of at least 99 % and most preferably of at least preferably at least 99.5 %.

A dried layer prepared with the liquid composition according to the present invention preferably has a pencil hardness of at least 6H, preferably of at least 7H, more preferably of at least 8H and most preferably of at least preferably at least 9H.

A contribution towards achieving the abovementioned objects is also made by a process for the production of a layered body, comprising the process steps:
A) the provision of a substrate;
B) the application of the liquid composition according to the present invention onto this substrate;
C) the at least partial removal of the liquid phase ii) from the liquid composition to obtain a layered body comprising an electrically conductive layer coated onto the substrate.

In process step A) a substrate is first provided, wherein the nature of the substrate depends on the intended purpose for which the composition according to the present invention is employed. Suitable substrates include films, particularly preferably polymer films, very particularly preferably polymer films of thermoplastic polymers, or glass plates.

In process step B) the liquid composition according to the present invention is then applied onto the substrate, it being possible for this application to be carried out by known processes, e.g. by spin coating, impregnation, pouring, dripping on, spraying, misting, knife coating, slot die coating, brushing or printing, for example by ink-jet, screen, gravure, offset or tampon printing, preferably by slot die coating, spraying or ink-jet printing, in a wet film thickness of from, for example, 0.5 µm to 250 µm, preferably in a wet film thickness of from 2 µm to 50 µm.

In process step C), at least a part of the liquid phase ii) is then removed from the liquid composition to obtain a layered body comprising an electrically conductive layer coated onto the substrate, this removal preferably being carried out by a drying at a temperature in a range of from 20 °C to 200 °C of the substrate coated with the composition.

Also disclosed is a layered body which is obtainable by the process described above. In this context it is particularly preferred that the conductive layer of the layered body is characterized by at least one of the following properties (α1) to (α3), preferably by all of these properties:
(α1) a sheet resistance of at least 1 × 10⁶ Ω/sq, preferably of at least 5 × 10⁶ Ω/sq and more preferably of at least 1 × 10⁷ Ω/sq;
(α2) an internal transmission of at least 98 %, preferably at least 98.5 %, more preferably at least 99 % and most preferably at least preferably at least 99.5 %;
(α3) a pencil hardness of at least 6H, preferably at least 7H, more preferably at least 8H and most preferably at least preferably at least 9H.

A contribution towards achieving the abovementioned objects is also made by the use of the liquid composition according to the present invention for the production of a layered body comprising a substrate and an electrically conductive layer coated onto the substrate.

The layered bodies that can be prepared with the liquid composition according to the present invention are outstandingly suitable for use as electronic components, in particular as conductive or antistatic means, as transparent heating or as electrodes. They can advantageously be transparent.

These layered bodies can be employed as electronic components, for example also on films, packaging of electronic components, for finishing films of plastics and for coating screens. They can furthermore be used as transparent electrodes e.g. in displays, for example as a substitute for indium-tin oxide electrodes, or as electrical conductors in polymeric electronics. Further possible uses are sensors, batteries, solar cells, electrochromic windows (smart windows) and displays and corrosion protection.

In view of the low conductivity, the high UV-stability and the high scratch resistance of the coatings obtained with the liquid composition according to the present invention these liquid compositions are particularly useful for the production of an antistatic coating or an electromagnetic radiation shield. They are furthermore particularly useful for the preparation of a hole-transport layer in an organic light emitting diode (OLED) or in an organic photovoltaic (OPV) element or in an organic photo detector (OPD).

The invention is now explained in more detail with the aid of non-limiting examples.

### TEST METHODS

### Determination of the sheet resistance

The Sheet resistance was measured with a High Resistivity Meter Model Hiresta - UX (Model MCP-HT 800) equipped with a Ring-Probe URS RMH214. The measurement was conducted at 100V.

### Pencil hardness

Pencil hardness of a coating is conducted by sliding various pencils of different hardness across a coating deposited on a glass plate according to ISO 15184. The possible impact of the pencil trace on the coating is evaluated by eye.

### Transmission

The internal transmission of the coated substrates is determined on a 2-channel spectrometer (Lambda900, PerkinElmer). In order to rule out interferences of the scattered light here, the sample is measured in a photometer sphere (Ulbricht sphere), as a result of which scattered light and transmitted light are detected by the photodetector. The transmission is thus understood as meaning the absorption of the coating and of the substrate. The transmission of the pure substrate is first measured. Melinex 506 films having a thickness of 175 µm are used as the substrate. Thereafter, the coated substrate is measured. The transmission spectra are recorded in the range of visible light, i.e. from 320 nm to 780 nm with a step width of 5 nm.

The standard colour value Y of the sample is calculated from the spectra in accordance with DIN 5033, taking as the basis a 10° observer angle and light type D65. The internal transmission is calculated from the ratio of the standard colour values of the substrate with coating (Y) to that without coating (Y₀). The internal transmission corresponds to Y/Y₀ × 100 in per cent. For simplicity, only transmission is referred to the in the following.

### EXAMPLES

### Example 1

Clevios P VP CH 8000 (Heraeus) (PEDOT/PSS-weight ratio 1 : 20; solid content: 2.8 wt.-%) was mixed with different amounts of different solvents as indicated in table 1 (all fully soluble in water). For example to obtain sample 2, 95 g Clevios P VP CH 8000 were mixed with 5 g butyl glycol and stirred for 10 min. The dispersions were tested with respect to nozzle clogging. Samples were spin-coated onto glass substrates and dried at 200°C for 15 min. The sheet resistance was determined. Table 1 summarizes the results. Inventive samples 3, 4, 5 and 6 are compared to reference samples 7 and 8.

**Table 1 (* = not according to the present invention)**

| sample | added solvent | concentration [%] | boiling point solvent [°C] | sheet resistance [Ohm/sq] | nozzle clogging | film quality |
|---|---|---|---|---|---|---|
| 1 | none | | | 1.5 × 10⁹ | yes | good |
| 2* | butyl glycol | 5 | 171 | 5.7 × 10⁹ | no | good |
| 3 | diacetone alcohol | 1 | 166 | 1.8 × 10⁹ | no | good |
| 4 | diacetone alcohol | 2.5 | 166 | 3.6 × 10⁹ | no | good |
| 5 | diacetone alcohol | 5 | 166 | 2.5 × 10⁹ | no | good |
| 6 | diacetone alcohol | 10 | 166 | 3.9 × 10⁶ | no | good |
| 7 | DMSO | 5 | 189 | 4.6 × 10⁴ | no | good |
| 8 | ethylene glycol | 5 | 199 | 4.2 × 10⁵ | no | good |

Only the high-boiling solvents that form azeotropes with water do not change resistivity of CH 8000-films significantly, whereas DMSO or ethylene glycol do.

### Example 2

0.1 g tannic acid are dissolved in 84 g of ethanol. 12.6 g Clevios P (Heraeus) are placed in a 250 ml glass beaker. The solution of tannic acid in ethanol is added to the Clevios P dispersion under stirring. 3.1 g tetraethyl orthosilicate are added to the mixture. The pH is adjusted to 3.3. Different amounts of additional solvents (as indicated in table 2) were added to the dispersion. The mixture is stirred for 30 min at room temperature.

A film with a wet film thickness of 12 µm is deposited on alkali-free glass using a wire bar and subsequently dried at 120°C for 20 min. Table 2 shows the results. Inventive samples 10 and 11 are compared to reference samples 9 and 12 to 16.

**Table 2**

| sample | added solvent (solubility in water) | concentration [%] | sheet resistance [Ohm/sq] | nozzle clogging | pencil hardness | film quality |
|---|---|---|---|---|---|---|
| 9 | none | | 1 × 10⁸ | yes | 8H | good |
| 10 | diacetone alcohol (fully) | 7 | 4 × 10⁷ | no | 8H | good |
| 11 | diacetone alcohol (fully) | 11 | 2 × 10⁷ | no | 8H | dewetting |
| 12 | 3-Methyl-1-butanol (3 %) | 5 | 1 × 10⁶ | no | 7H | turbid film |
| 13 | PGMEA (20%) | 5 | 1 × 10⁸ | no | 3H | turbid film |
| 14 | 1-butanol (8 %) | 5 | 6 × 10⁶ | no | 5H | dewetting |
| 15 | dipropylene glycol n-propyl ether (15%) | 10 | 1 × 10⁹ | no | 8H | turbid film |
| 16 | propylene glycol diacetate (7 %) | 3 | 1 × 10⁸ | no | 1H | turbid film |

### Example 3 (not according to the present invention)

Clevios P VP CH 8000 was concentrated to 3.24 % solids. Various high-boiling solvents were added in different amounts to this "Clevios CH8000 concentrated" (PEDOT/PSS-weight ratio 1 : 20; solid content: 3.24 wt.-%). Samples were spin-coated onto glass substrates and dried at 200°C for 15 min. The sheet resistance was determined as shown in table 3. The layer thickness for the samples was 200 nm.

**Table 3**

| sample | added solvent | CH 8000 concentrated sheet resistance [Ω/sq] |
|---|---|---|
| 17 | None | 7.5 × 10⁹ |
| 18 | butyl glycol (1 wt.-%) | 9 × 10⁹ |
| 19 | butyl glycol (2.5 wt.-%) | 1.3 × 10¹⁰ |
| 20 | butyl glycol (5 wt.-%) | 1.8 × 10¹⁰ |
| 21 | butyl glycol (10 wt.-%) | 4 × 10⁸ |
| 22 | ethyl glycol (1 wt.-%) | 9 × 10⁹ |
| 23 | ethyl glycol (2.5 wt.-%) | 1 × 10¹⁰ |
| 24 | ethyl glycol (5 wt.-%) | 1.8 × 10¹⁰ |

Samples 18 to 24 are compared to reference sample 17.

## Claims

1. A liquid composition comprising
i) particles comprising a complex of a polythiophene and a polyanion;
ii) a liquid phase, wherein the liquid phase comprises
iia) water and
iib) at least one organic solvent having
- a boiling point, determined at a pressure of 1013 mbar, in the range from 110 to 250°C and
- a solubility in water, determined at 25°C, of at least 10 wt.-%;
wherein the organic solvent iib) is capable of forming an azeotrope with water iia);
- wherein the polythiophene is poly(3,4-ethylenedioxythiophene) and wherein the polyanion is an anion of polystyrene sulfonic acid;
- wherein the at least one organic solvent iib) is diacetone alcohol;
- wherein the liquid composition comprises the at least one organic solvent iib) in an amount of less than 10 wt.-%, based on the total weight of the liquid composition; and
- wherein the liquid composition comprises the complex i) of a polythiophene and a polyanion in an amount of 0.001 to 2.5 wt.-%, based on the total weight of the liquid composition.

2. The liquid composition according to claim 1, wherein the liquid composition further comprises as at least one further additive iii) a low-boiling solvent, wherein the low-boiling solvent is ethanol

3. The liquid composition according to claim 1 or 2, wherein the liquid composition further comprises as at least one further additive iv) a crosslinker, wherein the crosslinker is tetraethyl orthosilicate (TEOS).

4. The liquid composition according to anyone of claims 1 to 3, wherein the liquid composition comprises the complex i) of a polythiophene and a polyanion in an amount in the range from 0.005 to 1.0 wt.-%, based on the total weight of the liquid composition.

5. The liquid composition according to anyone of claims 1 to 4, wherein the liquid composition comprises water iia) in an amount in the range from 10 to 98 wt.-%, based on the total weight of the liquid composition.

6. The liquid composition according to anyone of claims 1 to 5, wherein the liquid composition comprises the at least one organic solvent iib) in an amount of less than 7 wt.-%, based on the total weight of the liquid composition.

7. A process for the preparation of a layered body, comprising the process steps:
A) the provision of a substrate;
B) the application of the liquid composition according to one of claims 1 to 6 onto this substrate;
C) the at least partial removal of the liquid phase ii) from the liquid composition to obtain a layered body comprising an electrically conductive layer coated onto the substrate.

8. The process according to claim 7, wherein application of the liquid composition in process step B) is performed by slot die coating, spraying or ink-jet printing.

9. Use of the liquid composition according to anyone of claims 1 to 6 for the formation of an antistatic coating or an electromagnetic radiation shield or for the preparation of a hole-transport layer in an *organic light emitting diode (OLED)* or in an organic photovoltaic (OPV) element or an organic photo detector (OPD).

## Patentansprüche

1. Flüssige Zusammensetzung, umfassend
i) Partikel, umfassend einen Komplex aus einem Polythiophen und einem Polyanion;
ii) eine flüssige Phase, wobei die flüssige Phase umfasst
iia) Wasser und
iib) mindestens ein organisches Lösungsmittel, das aufweist
- einen Siedepunkt, der bei einem Druck von 1013 mbar, in dem Bereich von 110 bis 250 °C bestimmt wird
und
- eine Löslichkeit in Wasser, die bei 25 °C bestimmt wird, von mindestens 10 Gew.-%;
wobei das organische Lösungsmittel iib) in der Lage ist, mit Wasser iia) ein Azeotrop zu bilden;
- wobei das Polythiophen Poly(3,4-ethylendioxythiophen) ist und wobei das Polyanion ein Anion von Polystyrolsulfonsäure ist;
- wobei das mindestens eine organische Lösungsmittel iib) Diacetonalkohol ist;
- wobei die flüssige Zusammensetzung das mindestens eine organische Lösungsmittel iib) in einer Menge von weniger als 10 Gew.-%, bezogen auf das Gesamtgewicht der flüssigen Zusammensetzung, umfasst; und
- wobei die flüssige Zusammensetzung den Komplex i) aus einem Polythiophen und einem Polyanion in einer Menge von 0,001 bis 2,5 Gew.-%, bezogen auf das Gesamtgewicht der flüssigen Zusammensetzung, umfasst.

2. Flüssige Zusammensetzung nach Anspruch 1, wobei die flüssige Zusammensetzung ferner als mindestens ein weiteres Additiv iii) ein niedrigsiedendes Lösungsmittel umfasst, wobei das niedrigsiedende Lösungsmittel Ethanol ist

3. Flüssige Zusammensetzung nach Anspruch 1 oder 2, wobei die flüssige Zusammensetzung ferner als mindestens ein weiteres Additiv iv) einen Vernetzer umfasst, wobei der Vernetzer Tetraethylorthosilicat (TEOS) ist.

4. Flüssige Zusammensetzung nach einem der Ansprüche 1 bis 3, wobei die flüssige Zusammensetzung den Komplex i) aus einem Polythiophen und einem Polyanion in einer Menge in dem Bereich von 0,005 bis 1,0 Gew.-%, bezogen auf das Gesamtgewicht der flüssigen Zusammensetzung, umfasst.

5. Flüssige Zusammensetzung nach einem der Ansprüche 1 bis 4, wobei die flüssige Zusammensetzung Wasser iia) in einer Menge in dem Bereich von 10 bis 98 Gew.-%, bezogen auf das Gesamtgewicht der flüssigen Zusammensetzung, umfasst.

6. Flüssige Zusammensetzung nach einem der Ansprüche 1 bis 5, wobei die flüssige Zusammensetzung das mindestens eine organische Lösungsmittel iib) in einer Menge von weniger als 7 Gew.-%, bezogen auf das Gesamtgewicht der flüssigen Zusammensetzung, umfasst.

7. Verfahren zum Herstellen eines schichtweisen Körpers, umfassend die Verfahrensschritte:
A) das Bereitstellen eines Substrats;
B) das Aufbringen der flüssigen Zusammensetzung nach einem der Ansprüche 1 bis 6 auf dieses Substrat;
C) das mindestens teilweise Entfernen der flüssigen Phase ii) aus der flüssigen Zusammensetzung, um einen schichtweisen Körper zu erhalten, umfassend eine elektrisch leitfähige Schicht, mit der das Substrat beschichtet ist.

8. Verfahren nach Anspruch 7, wobei das Aufbringen der flüssigen Zusammensetzung in Verfahrensschritt B) durch Schlitzdüsenbeschichtung, Sprühen oder Tintenstrahldrucken durchgeführt wird.

9. Verwendung der flüssigen Zusammensetzung nach einem der Ansprüche 1 bis 6 zum Bilden einer antistatischen Beschichtung oder einer elektromagnetischen Strahlungsabschirmung oder zum Herstellen einer Lochtransportschicht in einer *organischen Leuchtdiode (OLED)* oder in einem organischen Photovoltaikelement (OPV-Element) oder einem organischen Photodetektor (OPD).

## Revendications

1. Composition liquide comprenant
i) des particules comprenant un complexe d'un polythiophène et d'un polyanion ;
ii) une phase liquide, la phase liquide comprenant
iia) de l'eau et
iib) au moins un solvant organique ayant
- un point d'ébullition, déterminé à une pression de 1013 mbar, dans la plage de 110 à 250 °C
et
- une solubilité dans l'eau, déterminée à 25 °C, d'au moins 10 % en poids ;
le solvant organique iib) étant capable de former un azéotrope avec l'eau iia) ;
- le polythiophène étant le poly(3,4-éthylènedioxythiophène) et le polyanion étant un anion d'acide sulfonique de polystyrène ;
- l'au moins un solvant organique iib) étant de l'alcool diacétonique ;
- la composition liquide comprenant l'au moins un solvant organique iib) en une quantité inférieure à 10 % en poids, sur la base du poids total de la composition liquide ; et
- la composition liquide comprenant le complexe i) d'un polythiophène et d'un polyanion en une quantité de 0,001 à 2,5 % en poids, sur la base du poids total de la composition liquide.

2. Composition liquide selon la revendication 1, la composition liquide comprenant en outre en tant qu'au moins un additif supplémentaire iii) un solvant à point d'ébullition bas, le solvant à point d'ébullition bas étant l'éthanol

3. Composition liquide selon la revendication 1 ou 2, la composition liquide comprenant en outre en tant qu'au moins un additif supplémentaire iv) un agent de réticulation, l'agent de réticulation étant l'orthosilicate de tétraéthyle (TEOS).

4. Composition liquide selon l'une quelconque des revendications 1 à 3, la composition liquide comprenant le complexe i) d'un polythiophène et d'un polyanion en une quantité dans la plage de 0,005 à 1,0 % en poids, sur la base du poids total de la composition liquide.

5. Composition liquide selon l'une quelconque des revendications 1 à 4, la composition liquide comprenant de l'eau iia) en une quantité dans la plage de 10 à 98 % en poids, sur la base du poids total de la composition liquide.

6. Composition liquide selon l'une quelconque des revendications 1 à 5, la composition liquide comprenant l'au moins un solvant organique iib) en une quantité inférieure à 7 % en poids, sur la base du poids total de la composition liquide.

7. Procédé pour la préparation d'un corps en couches, comprenant les étapes du procédé :
A) la fourniture d'un substrat ;
B) l'application de la composition liquide selon l'une des revendications 1 à 6 sur ce substrat ;
C) l'élimination au moins partielle de la phase liquide ii) de la composition liquide pour obtenir un corps en couches comprenant une couche électroconductrice revêtue sur le substrat.

8. Procédé selon la revendication 7, l'application de la position de composition liquide dans l'étape de procédé B) étant effectuée par enduction à filière plate, pulvérisation ou impression à jet d'encre.

9. Utilisation de la composition liquide selon l'une quelconque des revendications 1 à 6 pour la formation d'un revêtement antistatique ou d'un blindage contre le rayonnement électromagnétique ou pour la préparation d'une couche de transport de trous dans une *diode électroluminescente organique (OLED)* ou dans un élément photovoltaïque organique (OPV) ou un photodétecteur organique (OPD).
